# EUROPEAN PATENT SPECIFICATION

(11) **EP 2 439 899 B1**
(45) Date of publication and mention of the grant of the patent: **21.03.2018**
(21) Application number: 11181526.2
(22) Date of filing: 15.09.2011
(51) Int. Cl.: H04L 29/06, G08G 5/00

(54) **SYSTEMS AND METHODS FOR MANAGING NON-INTEGRATED CONTROLLER PILOT DATA LINK COMMUNICATIONS (CPDLC) SYSTEMS ON AN AIRCRAFT**
SYSTEME UND VERFAHREN ZUR VERWALTUNG NICHTINTEGRIERTER SYSTEME ZUR DATENLINK-KOMMUNIKATION ZWISCHEN PILOTEN UND FLUGLOTSEN IN EINEM FLUGZEUG
SYSTÈMES ET PROCÉDÉS DE GESTION DE SYSTÈMES DE COMMUNICATIONS DE LIAISON DE DONNÉES DE PILOTE DE CONTRÔLEUR NON INTÉGRÉ SUR UN AVION

(30) Priority: 23.09.2010 US 888499
(43) Date of publication of application: 11.04.2012
(73) Proprietor: Honeywell International Inc., Morris Plains, NJ 07950 (US)
(72) Inventor: Judd, Thomas D., Morristown, NJ New Jersey 07962-2245 (US); Judy, Vicki, Morristown, NJ New Jersey 07962-2245 (US); Locke, Barry, Morristown, NJ New Jersey 07962-2245 (US); Scheu, Steve, Morristown, NJ New Jersey 07962-2245 (US)
(74) Representative: Houghton, Mark Phillip

(56) References cited:
- US-A1- 2008 163 093
- US-A1- 2008 208 399

## Description

### BACKGROUND

Two different systems for implementing Controller Pilot Data Link Communications (CPDLC) for air traffic control are available for commercial aircraft today. The first CPDLC system is referred to as the Future Air Navigation System (FANS), or FANS CPDLC. FANS based applications are typically implemented on an aircraft's Flight Management Computer (FMC), also referred to as the Flight Management System (FMS), and communicate with air traffic control (ATC) stations using text based messages communicated over the Aircraft Communications Addressing and Reporting System (ACARS). The second CPDLC system is implemented over the Aeronautical Telecommunication Network (ATN) via an aircraft's Communication Management Function (CMF) and is commonly referred to as ATN CPDLC. Use of FANS CPDLC versus ATN CPDLC on an aircraft is largely based on geographical considerations such that an aircraft that travels from a FANS CPDLC region to an ATN CPDLC region would greatly benefit from being able to support both CPDLC systems.

There are problems that arise however when both FANS CPDLC and ATN CPDLC systems are available to an aircraft's flight crew. First, creating a single integrated solution that manages and provides both CPDLC options has proven to be expensive to design and implement as compared to non-integrated solutions. Second, FANS and ATN CPDLC systems both require a logon (AFN logon or CM logon) and share "alerting" approaches when a CPDLC message is received from a ground controller. In cases where the CMF supports an ATN CPDLC application and the FMC independently supports a FANS CPDLC application, members of the flight crew may become confused as to which system to logon to and which system to access after getting a CPDLC alert. Also, with non-integrated system, it is potentially possible to establish two different CPDLC sessions using the different CPDLC systems at the same time. This present a potentially dangerous situation because an aircraft cannot allow two different Current Data Authority (CDA) CPDLC concurrent connections because it is not permitted by regulation to have two different air traffic controllers in charge of any one aircraft. Such a configuration may further face regulatory certification issues if not resolved and could also create training and flight work-load issues. An example of a prior art disclosure of an electronic flight bag system for use on a mobile platform is provided in US 2008/0208399.

For the reasons stated above and for other reasons stated below which will become apparent to those skilled in the art upon reading and understanding the specification, there is a need in the art for improved systems and methods for managing non-integrated (CPDLC) systems on a single aircraft.

### SUMMARY

The Embodiments of the present invention provide methods and systems for managing non-integrated (CPDLC) systems on a single aircraft and will be understood by reading and studying the following specification.

In one embodiment, a system for implementing a non-integrated FANS/ATN CPDLC solution comprises: a first computing system executing a first CPDLC application; a second computing system executing a second CPDLC application; at least one Human Machine Interface (HMI) coupled to the first computing system and the second computing system, the Human Machine Interface configured to display screens generated by the first CPDLC application and configured to display screens generated by the second CPDLC application; and a manager function that arbitrates Human Machine Interface access to the screens generated by the first CPDLC application and the screens generated by the second CPDLC application. The manager function restricts access to one or more of the screens generated by the first CPDLC application based on a logon status of the second CPDLC application. The manager function restricts access to one or more of the screens generated by the second CPDLC application based on a logon status of the first CPDLC application.

### DRAWINGS

Embodiments of the present invention can be more easily understood and further advantages and uses thereof more readily apparent, when considered in view of the description of the preferred embodiments and the following figures in which:
Figure 1 is a block diagram of a system for implementing a non-integrated FANS/ATN CPDLC solution of one embodiment of the present invention;
Figure 2 is a block diagram of a control display unit (CDU) for a Human Machine interface of one embedment of the present invention;
Figure 3 is a block diagram of a system for implementing another non-integrated FANS/ATN CPDLC solution of one embodiment of the present invention; and
Figure 4 is a flow chart illustrating a method of one embodiment of the present invention.

In accordance with common practice, the various described features are not drawn to scale but are drawn to emphasize features relevant to the present invention. Reference characters denote like elements throughout figures and text.

### DETAILED DESCRIPTION

In the following detailed description, reference is made to the accompanying drawings that form a part hereof, and in which is shown by way of specific illustrative embodiments in which the invention may be practiced. These embodiments are described in sufficient detail to enable those skilled in the art to practice the invention, and it is to be understood that other embodiments may be utilized and that logical, mechanical and electrical changes may be made without departing from the scope of the present invention. The following detailed description is, therefore, not to be taken in a limiting sense.

With embodiments of the present invention, an aircraft's flight crew will decide which CPDLC system to log into via a Human Machine Interface (HMI). The decision can be communicated to the HMI by either an explicit system selection, or by indicating which system to logon to. Access to the non-select system will be disabled to prevent establishment of another simultaneous CPDLC session. The flight crew will thus only have access to the active system and know that any received datalink message alert is for the selected system. By preventing access to the non-selected system, one or more embodiments of the present invention will also prevent the inadvertent establishment of multiple CPDLC sessions.

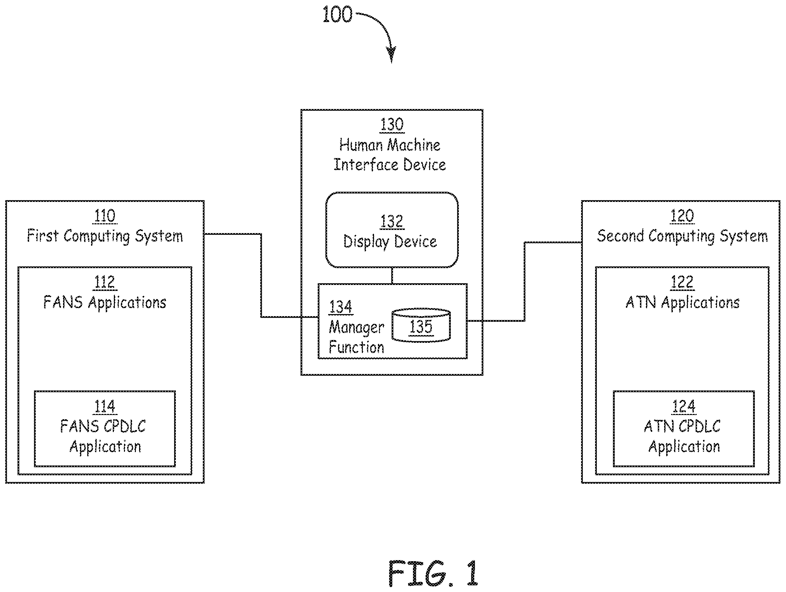

Figure 1 is a block diagram of a system 100 for implementing a non-integrated FANS/ATN CPDLC solution of one embodiment of the present invention. System 100 comprises a first computing system 110 for executing one or more FANS applications 112 including a FANS CPDLC application 114, a second computing system 120 for executing one or more ATN applications 122 including an ATN CPDLC application 124, and at least one Human Machine Interface (HMI) 130 coupled to the first computing system 110 and the second computing system 120. In one or more alternate embodiments, the FANS functions of the first computing system may be implemented by the aircrafts FMC, FMS or CMF. Similarly, in at least one embodiment, the ATN functions of the second computing system would be implemented by the aircraft's CMF. As used in this specification herein, the terms "non-integrated" or "not integrated" mean that the first computing system implementing FANS and the second computing system implementing ATN do not share computing resources such as processors or memory. Even though they are not integrated with each other, the two computing systems may however both have access to commonly used peripheral devices within the aircraft (e.g. audible alarm devices, HMIs, wireless communication radios) and both send and receive data over a shared on-board data network.

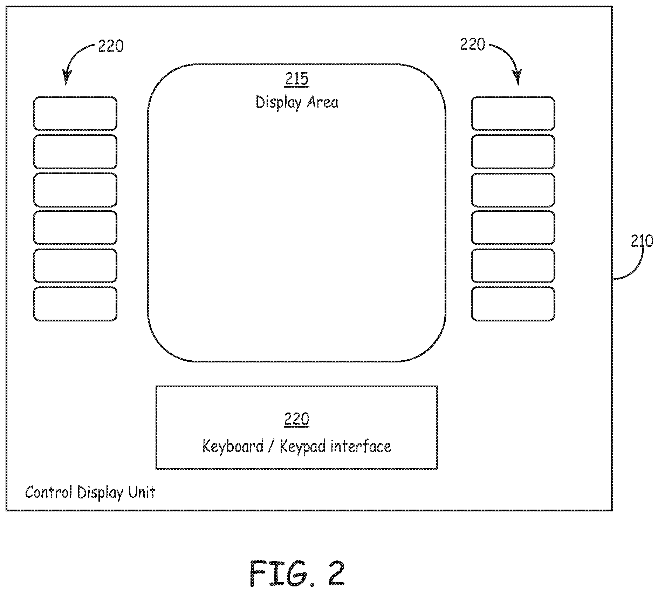

Human Machine Interface 130 provides at least one common display device 132 to present screens generated by the FANS and ATN CPDLC applications 114 and 124 to the aircrafts flight crew. In one embodiment, Human Machine Interface 130 comprises a Multifunction Display (MFD) which is a forward field graphical display device that graphically displays screens to the flight crew and provides a cursor controlled interface to flight crew users. In one embodiment, such as shown in Figure 2, the Human Machine Interface 130 comprises a Control Display Unit (CDU) 210, such as a Multipurpose Control Display Unit (MCDU) having a display area 215, a plurality of programmable buttons 220 on either side of the display area 215, and a keyboard interface 220. In one embodiment, the common display device 132 comprises a MFD which presents the flight crew with a graphical representation having the "look and feel" of an MCDU such as shown in Figure 2. In yet other embodiments, Human Machine Interface 130 comprises a mixed implementation utilizing the resources of both a Multifunction Display (MFD) and a Control Display Unit (CDU) to interface with the flight crew.

In the embodiment of Figure 1, Human Machine Interface 130 further comprises a manager function 134 which arbitrates the flight crew's access to screens of the FANS and ATN CPDLC applications 114 and 124. In one embodiment, manager function 134 drives one or more default screens which are displayed on HMI 130 as needed to control the logon and access to the FANS and ATN CPDLC Application's (114, 124) screens. The flight crew would select from those default screens which CPDLC/Logon system on the HMI 130 that they wanted to use. Manager function 134 would then disable the non-selected system from establishing a CPDLC connection and prevent flight crew access to screens of the non-selected system. In one embodiment, manager function 134 will disconnect the CPDLC connection of the non-selected system (if the now non-selected system was previously connected) once the flight crew logs onto the selected system. For example, where a flight crew has an established ATN CPDLC connection and then utilizes the manager function 134 to switch to FANS, the manager function 134 would present the FANS logon screen to the flight crew via the HMI 130 and then automatically logoff the ATN CPDLC system applications 124. Once logged onto FANS, access to ATN screens would be prevented by manager function 134.

In one embodiment, manager function 134 arbitrates screen access by internally keeping track of whatever system the flight crew logged on last. In one embodiment, the manager function 134 is provided with the name of the currently active air traffic control center. When the currently active air traffic control center is a FANS CPDLC center, manager function 134 provides access to FANS CPDLC application screens and prevents access to ATN CPDLC application screens. Conversely, when the current active air traffic control center is an ATN CPDLC center, manager function 134 provides access to ATN CPDLC screen and prevents access to FANS CPDLC application screens. In one such embodiment, the manager function 134 includes a look-up table 135, or other such list or database that indicates whether an air traffic control center is a FANS or ATN center based on the name of air traffic control center.

In another embodiment, manager function 134 polls the FANS and ATN CPDLC applications 114, 124, or otherwise periodically receives logon information from them. For example, in one embodiment, manager function 134 receives from the first computing system 110 information regarding the name of any active FANS CPDLC connection with an air traffic control center (or an indication that there is no active FANS CPDLC air traffic control center) and information regarding any FANS CPDLC logon request that is pending. Similarly, manager function 134 receives from the second computing system 120 information regarding the name of any active ATN CPDLC connection with an air traffic control center (or an indication that there is no active ATN CPDLC air traffic control center) and information regarding any ATN CPDLC logon request that is pending. Manager function 134 will read these parameters to determine which CPDLC function is, or will become, the active control function based first on any currently active center alternately based on any logon pending. Theoretically there should not be two logons pending since initiating a logon request from one CPDLC system will, in at least one embodiment, trigger manager function 134 to cancel any pending logon request for the other system. Alternately, manager function 134 can alert the flight crew when there is an attempt to logon to one CPDLC system while there is a still logon request pending on the other system. The flight crew can then decide whether to cancel the pending logon and proceed with the second logon request, or cancel the second logon request and wait for resolution of the pending logon.

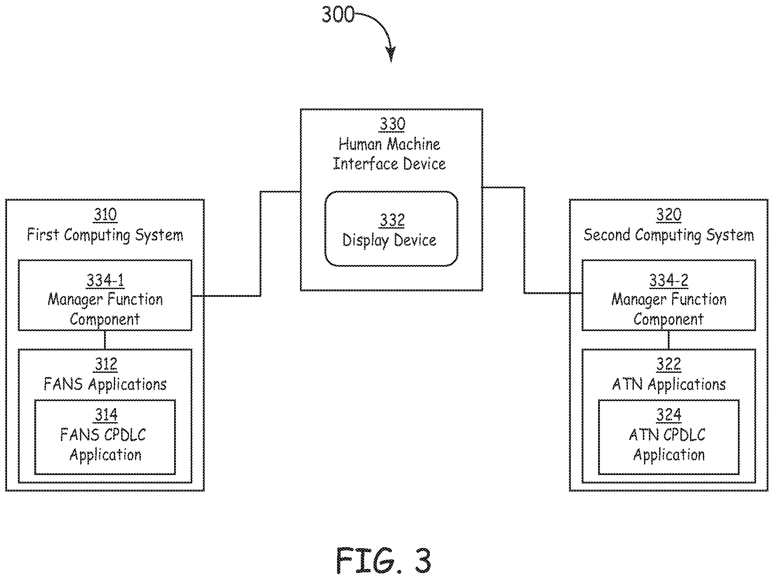

Figure 3 is a block diagram of a system 300 for implementing another non-integrated FANS/ATN CPDLC solution of one embodiment of the present invention. System 300 comprises a first computing system 310 for executing one or more FANS applications 312 including a FANS CPDLC application 314, a second computing system 320 for executing one or more ATN applications 322 including an ATN CPDLC application 324, and at least one Human Machine Interface (HMI) 330 coupled to the first computing system 310 and the second computing system 320. In one or more alternate embodiments, the FANS functions of the first computing system may be implemented by the aircrafts FMC, FMS or CMF. Similarly, in at least one embodiment, the ATN functions of the second computing system would be implemented by the aircraft's CMF.

Human Machine Interface 330 provides a common display device 332 to present screens generated by the FANS and ATN CPDLC applications 314 and 324 to the aircraft's flight crew. In one embodiment, Human Machine Interface 330 comprises a Multifunction Display (MFD) which is a forward field graphical display device that graphically displays screens to the flight crew and provides a cursor controlled interface to flight crew users. In one embodiment, Human Machine Interface 330 comprises a Control Display Unit (CDU) 210 such as described with respect to Figure 2 above.

Unlike the embodiment of Figure 1, the manager function (shown generally at 334-1 and 334-2) does not reside on Human Machine Interface 330 but is instead distributed between the first computing system 310 and the second computing system 320. Such a configuration would be appropriate where, for example, HMI 330 is a "dumb" display terminal or otherwise includes only limited processing capabilities. In this case, each of the distributed manager function components 334-1 and 334-2 arbitrate access to the CPDLC screens provide by the respective computing system 310, 320 on which they reside, based on monitoring the status of the other system. For example, in one embodiment, distributed manager function component 334-1 monitors ATN CPLDC logon status information, and pending logon information, received from the ATN CPDLC application 324. When distributed manager function component 334-1 determines that there is an active or pending request for an ATN CPDLC connection, it prevents HMI 330 from providing access to FAN CPDLC application 314 screens. Similarly, distributed manager function component 334-2 monitors FANS CPLDC logon status information, and pending logon information, received from the FANS CPDLC application 312. When distributed manager function component 334-2 determines that there is an active or pending request for and FANS CPDLC connection, it prevents HMI 330 from providing access to ATN CPDLC application 324 screens. In this way, the distributed manager function 334-1, 2 will read parameters from the opposing CPDLC system to determine which CPDLC function is, or will become, the active control function based first on any currently active center alternately based on any logon pending.

For example, in one embodiment, when a flight crew user attempts to logon to ATN CPDLC, the distributed manager function 334-2 will determine the status of the FANS CPDLC system. If there is no current or pending FANS CPDLC connecting, distributed manager function 334-2 permits HMI 330 to directly access the ATN CPDLC application 324 logon screen. When there is a current or pending FANS CPDLC, distributed manager function 334-2 alerts the flight crew. The flight crew can then decide whether to disconnect the current CPDLC connection (or cancel a pending logon) and proceed with an ATN CPDLC logon, or cancel the ATN CPDLC logon request. Distributed manager function 334-1 would arbitrate access to the FANS CPDLC logon by similarly monitoring the status of current or pending ATN CPDLC connections.

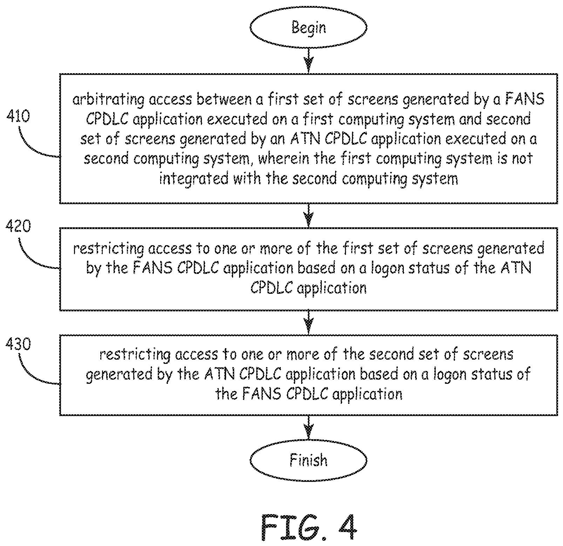

Figure 4 is a flow chart illustrating a method for implementing a non-integrated FANS/ATN CPDLC solution of one embodiment of the present invention. The method begins at 410 with arbitrating access between a first set of screens generated by a FANS CPDLC application executed on a first computing system and second set of screens generated by an ATN CPDLC application executed on a second computing system, wherein the first computing system is not integrated with the second computing system. As shown at 420, arbitrating access further comprises restricting access to one or more of the first set of screens generated by the FANS CPDLC application based on a logon status of the ATN CPDLC application. At 430, arbitrating access further comprises restricting access to one or more of the second set of screens generated by the ATN CPDLC application based on a logon status of the FANS CPDLC application. In one embodiment, the arbitrating process is performed by executing a manager function at a Human Machine Interface device coupled to the first computing system and the second computing system. In one such embodiment, the Human Machine Interface displays one or more default screen generated by the manager function that displays CPDLC logon selection options. In one embodiment, the manager function is executed at the Human Machine Interface device. Alternately, in another embodiment the manager function is distributed, comprising a first component executed by the first computing system and a second component executed by the second computing system. In one embodiment, the method further comprises disconnecting any FANS CPDLC connection and preventing access to one or more of the first set of screens when an ATN CPDLC logon occurs; and disconnecting any ATN CPDLC connection and preventing access to one or more of the second set of screens when a FANS CPDLC logon occurs.

Although the embodiment discussed above provide examples utilizing FANS and ATN CPDLC applications running over ACARS and ATN networks, embodiments of the present invention are not limited to just these two CPDLC and network options. HMI arbitration between any two computing systems used to implement separate CPDLC solutions can be realized by one of ordinary skill in the art using the teachings provided by this specification.

Several means are available to implement the systems and methods of the current invention as discussed in this specification. These means include, but are not limited to, digital computer systems, microprocessors, general purpose computers, programmable controllers and field programmable gate arrays (FPGAs) or application-specific integrated circuits (ASICs). Therefore other embodiments of the present invention are program instructions resident on computer readable media which when implemented by such means enable them to implement embodiments of the present invention. Computer readable media include any form of a physical computer memory storage device. Examples of such a physical computer memory device include, but is not limited to, punch cards, magnetic disks or tapes, optical data storage system, flash read only memory (ROM), non-volatile ROM, programmable ROM (PROM), erasable-programmable ROM (E-PROM), random access memory (RAM), or any other form of permanent, semi-permanent, or temporary memory storage system or device. Program instructions include, but are not limited to computer-executable instructions executed by computer system processors and hardware description languages such as Very High Speed Integrated Circuit (VHSIC) Hardware Description Language (VHDL).

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

## Claims

1. A system for implementing a non-integrated Future Air Navigation System / Aeronautical Telecommunication Network, FANS/ATN, Controller Pilot Data Link Communications, CPDLC solution, the system comprising:
a first computing system 110 executing a first CPDLC application 114;
a second computing system 120 executing a second CPDLC application 124;
at least one Human Machine Interface 130 coupled to the first computing system 110 and the second computing system 120, the Human Machine Interface 130 configured to display screens generated by the first CPDLC application 114 and configured to display screen generated by the second CPDLC application 124; and
a manager function 134 that arbitrates Human Machine Interface 130 access to the screens generated by the first CPDLC application 114 and the screens generated by the second CPDLC application 124;
wherein the manager function 134 restricts access to one or more of the screens generated by the first CPDLC application 114 based on a logon status of the second CPDLC application 124;
wherein the manager function 134 restricts access to one or more of the screens generated by the second CPDLC application 124 based on a logon status of the first CPDLC application 114.

2. The system of claim 1, wherein the first computing system 110 is executing one or more FANS applications including the first CPDLC application 114;
wherein the second computing system 120 is executing one or more ATN applications including the second CPDLC application 124; and
wherein the manager function 134 is executed within the Human Machine Interface 130.

3. The system of claim 1, wherein the manager function 134 is a distributed manager function 134 having a first component executed by the first computing system 110 and a second component executed by the second computing system 120;
wherein the first component receives ATN CPDLC logon status information from the second computing system 120; and
wherein the second component receives FANS CPDLC logon status information from the first computing system 110.

4. The system of claim 1, wherein the manager function 134 drives one or more default screens displayed via the at least on Human Machine Interface 130, the one or more default screens displaying CPDLC logon selection options.

5. The system of claim 1, wherein the manager function 134 disconnect any first CPDLC application 114 connection and prevents access to one or more first CPDLC application 114 screens when a CPDLC logon to the second CPDLC application 124 occurs.

6. The system of claim 1, where the manager function 134 arbitrates Human Machine Interface 130 access to the screens generated by the first CPDLC application 114 and the screens generated by the second CPDLC application 124 by internally keeping track of which CPDLC application was logged onto last.

7. The system of claim 1, wherein the manager function 134 arbitrates Human Machine Interface 130 access to the screens generated by the first CPDLC application 114 and the screens generated by the second CPDLC application 124 based on information associated with a current active air traffic control center.

8. A method for implementing a non-integrated FANS/ATN CPDLC solution, the method comprising:
arbitrating access between a first set of screens generated by a first CPDLC application 114 executed on a first computing system 110 and second set of screens generated by an second CPDLC application 124 executed on a second computing system 120, wherein the first computing system 110 is not integrated with the second computing system 120;
wherein arbitrating access restricts access to one or more of the first set of screens generated by the first CPDLC application 114 based on a logon status of the second CPDLC application 124; and
wherein arbitrating access restricts access to one or more of the second set of screens generated by the second CPDLC application 124 based on a logon status of the first CPDLC application 114.

9. The method of claim 8, wherein the first computing system 110 is executing one or more FANS applications including the first CPDLC application 114; and
wherein the second computing system 120 is executing one or more ATN applications including the second CPDLC application 124.

10. The method of claim 8 further comprising:
displaying one or more default screens generated by the manager function 134 via a Human Machine Interface 130 device, the one or more default screens displaying CPDLC logon selection options.

## Patentansprüche

1. System zum Implementieren einer nicht integrierten Lösung für ein zukünftiges Flugnavigationssystem/aeronautisches Telekommunikationsnetzwerk der Lotsen-Pilot-Datenverbindungskommunikationen bzw. FANS/ATN-CPDLC-Lösung, wobei das System Folgendes umfasst:
ein erstes Datenverarbeitungssystem 110, das eine erste CPDLC-Anwendung 114 ausführt;
ein zweites Datenverarbeitungssystem 120, das eine zweite CPDLC-Anwendung 124 ausführt;
mindestens eine Mensch-Maschine-Schnittstelle 130, die mit dem ersten Datenverarbeitungssystem 110 und dem zweiten Datenverarbeitungssystem 120 gekoppelt ist, wobei die Mensch-Maschine-Schnittstelle 130 zum Anzeigen von Bildschirmen, die durch die erste CPDLC-Anwendung 114 erzeugt werden, konfiguriert ist und zum Anzeigen eines Bildschirms, der durch die zweite CPDLC-Anwendung 124 erzeugt wird, konfiguriert ist; und
eine Managerfunktion 134, die einen Zugang der Mensch-Maschine-Schnittstelle 130 zu den Bildschirmen, die durch die erste CPDLC-Anwendung 114 erzeugt werden, und den Bildschirmen, die durch die zweite CPDLC-Anwendung 124 erzeugt werden, vermittelt;
wobei die Managerfunktion 134 einen Zugang zu einem oder mehreren der Bildschirme, die durch die erste CPDLC-Anwendung 114 erzeugt werden, basierend auf einem Anmeldestatus der zweiten CPDLC-Anwendung 124 beschränkt;
wobei die Managerfunktion 134 einen Zugang zu einem oder mehreren der Bildschirme, die durch die zweite CPDLC-Anwendung 124 erzeugt werden, basierend auf einem Anmeldestatus der ersten CPDLC-Anwendung 114 beschränkt.

2. System nach Anspruch 1, wobei das erste Datenverarbeitungssystem 110 eine oder mehrere FANS-Anwendungen ausführt, die die erste CPDLC-Anwendung 114 beinhalten;
wobei das zweite Datenverarbeitungssystem 120 eine oder mehrere ATN-Anwendungen ausführt, die die zweite CPDLC-Anwendung 124 beinhalten; und
wobei die Managerfunktion 134 innerhalb der Mensch-Maschine-Schnittstelle 130 ausgeführt wird.

3. System nach Anspruch 1, wobei die Managerfunktion 134 eine verteilte Managerfunktion 134 ist, die eine erste Komponente, die durch das erste Datenverarbeitungssystem 110 ausgeführt wird, und eine zweite Komponente, die durch das zweite Datenverarbeitungssystem 120 ausgeführt wird, beinhaltet;
wobei die erste Komponente ATN-CPDLC-Anmeldestatusinformationen vom zweiten Datenverarbeitungssystem 120 empfängt und
wobei die zweite Komponente FANS-CPDLC-Anmeldestatusinformationen vom ersten Datenverarbeitungssystem 110 empfängt.

4. System nach Anspruch 1, wobei die Managerfunktion 134 einen oder mehrere Standardbildschirme ansteuert, die über die mindestens eine Mensch-Maschine-Schnittstelle 130 angezeigt werden, wobei der eine oder die mehreren Standardbildschirme CPDLC-Anmeldeauswahloptionen anzeigen.

5. System nach Anspruch 1, wobei die Managerfunktion 134 eine jegliche Verbindung der ersten CPDLC-Anwendung 114 trennt und einen Zugang zu einem oder mehreren Bildschirmen der ersten CPDLC-Anwendung 114 verhindert, wenn eine CPDLC-Anmeldung zur zweiten CPDLC-Anwendung 124 stattfindet.

6. System nach Anspruch 1, wobei die Managerfunktion 134 einen Zugang der Mensch-Maschine-Schnittstelle 130 zu den Bildschirmen, die durch die erste CPDLC-Anwendung 114 erzeugt werden, und den Bildschirmen, die durch die zweite CPDLC-Anwendung 124 erzeugt werden, vermittelt, indem sie intern nachverfolgt, zu welcher CPDLC-Anwendung zuletzt eingeloggt wurde.

7. System nach Anspruch 1, wobei die Managerfunktion 134 einen Zugang der Mensch-Maschine-Schnittstelle 130 zu den Bildschirmen, die durch die erste CPDLC-Anwendung 114 erzeugt werden, und den Bildschirmen, die durch die zweite CPDLC-Anwendung 124 erzeugt werden, basierend auf Informationen, die mit einer gegenwärtigen aktiven Flugsicherungszentrale assoziiert sind, vermittelt.

8. Verfahren zum Implementieren einer nicht integrierten FANS/ATN-CPDLC-Lösung, wobei das Verfahren Folgendes umfasst:
Vermitteln eines Zugangs zwischen einer ersten Menge von Bildschirmen, die durch eine erste CPDLC-Anwendung 114 erzeugt werden, die auf einem ersten Datenverarbeitungssystem 110 ausgeführt wird, und einer zweiten Menge von Bildschirmen,
die durch eine zweite CPDLC-Anwendung 124 erzeugt werden, die auf einem zweiten Datenverarbeitungssystem 120 ausgeführt wird, wobei das erste Datenverarbeitungssystem 110 nicht mit dem zweiten Datenverarbeitungssystem 120 integriert ist;
wobei das Vermitteln des Zugangs einen Zugang zu einem oder mehreren der ersten Menge von Bildschirmen, die durch die erste CPDLC-Anwendung 114 erzeugt werden, basierend auf einem Anmeldestatus der zweiten CPDLC-Anwendung 124 einschränkt und
wobei das Vermitteln des Zugangs einen Zugang zu einem oder mehreren der zweiten Menge von Bildschirmen, die durch die zweite CPDLC-Anwendung 124 erzeugt werden, basierend auf einem Anmeldestatus der ersten CPDLC-Anwendung 114 einschränkt.

9. Verfahren nach Anspruch 8, wobei das erste Datenverarbeitungssystem 110 eine oder mehrere FANS-Anwendungen ausführt, die die erste CPDLC-Anwendung 114 beinhalten; und
wobei das zweite Datenverarbeitungssystem 120 eine oder mehrere ATN-Anwendungen ausführt, die die zweite CPDLC-Anwendung 124 beinhalten.

10. Verfahren nach Anspruch 8, das ferner Folgendes umfasst:
Anzeigen eines oder mehrerer Standardbildschirme, die durch die Managerfunktion 134 über eine Einrichtung einer Mensch-Maschine-Schnittstelle 130 erzeugt werden, wobei der eine oder die mehreren Standardbildschirme CPDLC-Anmeldeauswahloptionen anzeigen.

## Revendications

1. Système permettant la mise en oeuvre d'une solution non intégrée de communications contrôleur-pilote par liaison de données, notées CPDLC, sur le futur système de navigation aérienne/le réseau de télécommunications aéronautiques, notés FANS/ATN, le système comprenant :
un premier système informatique 110 exécutant une première application de CPDLC 114 ;
un deuxième système informatique 120 exécutant une deuxième application de CPDLC 124 ;
au moins une interface homme-machine 130 reliée au premier système informatique 110 et au deuxième système informatique 120, l'interface homme-machine 130 étant configurée pour afficher des écrans générés par la première application de CPDLC 114 et configurée pour afficher un écran généré par la deuxième application de CPDLC 124 ; et
une fonction gestionnaire 134 qui arbitre l'accès par l'interface homme-machine 130 aux écrans générés par la première application de CPDLC 114 et aux écrans générés par la deuxième application de CPDLC 124 ;
dans lequel la fonction gestionnaire 134 limite l'accès à un ou plusieurs des écrans générés par la première application de CPDLC 114 en fonction d'un état d'ouverture de session de la deuxième application de CPDLC 124 ;
dans lequel la fonction gestionnaire 134 limite l'accès à un ou plusieurs des écrans générés par la deuxième application de CPDLC 124 en fonction d'un état d'ouverture de session de la première application de CPDLC 114.

2. Système selon la revendication 1, dans lequel le premier système informatique 110 exécute une ou plusieurs applications sur FANS comportant la première application de CPDLC 114 ;
dans lequel le deuxième système informatique 120 exécute une ou plusieurs applications sur ATN comportant la deuxième application de CPDLC 124 ; et
dans lequel la fonction gestionnaire 134 est exécutée au sein de l'interface homme-machine 130.

3. Système selon la revendication 1, dans lequel la fonction gestionnaire 134 est une fonction gestionnaire répartie 134 comportant un premier composant exécuté par le premier système informatique 110 et un deuxième composant exécuté par le deuxième système informatique 120 ;
dans lequel le premier composant reçoit des informations d'état d'ouverture de session de CPDLC sur ATN en provenance du deuxième système informatique 120 ; et
dans lequel le deuxième composant reçoit des informations d'état d'ouverture de session de CPDLC sur FANS en provenance du premier système informatique 110.

4. Système selon la revendication 1, dans lequel la fonction gestionnaire 134 pilote un ou plusieurs écrans par défaut affichés via l'au moins une interface homme-machine 130, le ou les écrans par défaut affichant des options de sélection d'ouverture de session de CPDLC.

5. Système selon la revendication 1, dans lequel la fonction gestionnaire 134 déconnecte toute connexion de la première application de CPDLC 114 et bloque l'accès à un ou plusieurs écrans de la première application de CPDLC 114 lors d'une ouverture de session de CPDLC avec la deuxième application de CPDLC 124.

6. Système selon la revendication 1, dans lequel la fonction gestionnaire 134 arbitre l'accès par l'interface homme-machine 130 aux écrans générés par la première application de CPDLC 114 et aux écrans générés par la deuxième application de CPDLC 124 en conservant en interne une trace de l'identité de l'application de CPDLC avec laquelle il a été ouvert une session en dernier.

7. Système selon la revendication 1, dans lequel la fonction gestionnaire 134 arbitre l'accès par l'interface homme-machine 130 aux écrans générés par la première application de CPDLC 114 et aux écrans générés par la deuxième application de CPDLC 124 en fonction d'informations associées à un centre de contrôle de la circulation aérienne actif actuel.

8. Procédé permettant la mise en oeuvre d'une solution non intégrée de CPDLC sur FANS/ATN, le procédé comprenant l'étape suivante :
arbitrage de l'accès entre un premier ensemble d'écrans générés par une première application de CPDLC 114 exécutée sur un premier système informatique 110 et un deuxième ensemble d'écrans générés par une deuxième application de CPDLC 124 exécutée sur un deuxième système informatique 120, le premier système informatique 110 n'étant pas intégré au deuxième système informatique 120 ;
dans lequel l'arbitrage de l'accès limite l'accès à un ou plusieurs écrans du premier ensemble d'écrans générés par la première application de CPDLC 114 en fonction d'un état d'ouverture de session de la deuxième application de CPDLC 124 ; et
dans lequel l'arbitrage de l'accès limite l'accès à un ou plusieurs écrans du deuxième ensemble d'écrans générés par la deuxième application de CPDLC 124 en fonction d'un état d'ouverture de session de la première application de CPDLC 114.

9. Procédé selon la revendication 8, dans lequel le premier système informatique 110 exécute une ou plusieurs applications sur FANS comportant la première application de CPDLC 114 ; et
dans lequel le deuxième système informatique 120 exécute une ou plusieurs applications sur ATN comportant la deuxième application de CPDLC 124.

10. Procédé selon la revendication 8, comprenant en outre l'étape suivante :
affichage d'un ou de plusieurs écrans par défaut générés par la fonction gestionnaire 134 via un dispositif formant une interface homme-machine 130, le ou les écrans par défaut affichant des options de sélection d'ouverture de session de CPDLC.
